# EUROPEAN PATENT SPECIFICATION

(11) **EP 1 066 605 B1**
(45) Date of publication and mention of the grant of the patent: **20.02.2002**
(21) Application number: 99914189.8
(22) Date of filing: 26.03.1999
(51) Int. Cl.: G07F 5/18, G06F 13/38, G06F 13/12

(54) **VENDING MACHINE DUAL BUS ARCHITECTURE**
DOPPELBUSARCHITEKTUR FÜR VERKAUFSAUTOMATEN
ARCHITECTURE A DEUX BUS POUR DISTRIBUTEURS AUTOMATIQUES

(30) Priority: 27.03.1998 US 49204
(43) Date of publication of application: 10.01.2001
(73) Proprietor: THE COCA-COLA COMPANY, Atlanta, Georgia 30313 (US)
(72) Inventor: TAYLOR, Kit, W., Snellville, GA 30078 (US); SACILOWSKI, Walter, Sugar Land, TX 77479 (US); LANIER, Noel, Loganville, GA 30052 (US)
(74) Representative: Jackson, Robert Patrick
(86) International application number: PCT/US99/06663
(87) International publication number: WO 99/50800

(56) References cited:
- DE-A- 4 026 533
- GB-A- 2 255 260
- US-A- 4 025 760
- US-A- 4 107 777
- US-A- 4 803 348
- US-A- 5 713 028
- PATENT ABSTRACTS OF JAPAN vol. 099, no. 003, 31 March 1999 (1999-03-31) & JP 10 340370 A (COCA COLA CO:THE), 22 December 1998 (1998-12-22)

## Description

### TECHNICAL FIELD

The invention is directed toward a vending machine operating system architecture, and more particularly to a vending machine operating system architecture for operatively connecting vending machine peripherals of different communication standards to a main controller.

### BACKGROUND ART

Vending machines have not been standardized throughout the world. Rather, vending machines are as varied as the cultures of the countries in which the machines are located. For example, vending machines in Japan are very different than vending machines in the United States.

The Japanese culture is accustomed to buying a great many goods from a great variety of relatively sophisticated vending machines. The United States, in contrast, has a culture which is accustomed to purchasing a much smaller variety of goods from generally less sophisticated vending machines. The Japanese market tends to produce more sophisticated and more expensive hardware/architecture from which its vending machines are constructed. In contrast, the hardware of U.S. vending machines tends to be less sophisticated and less expensive.

At a basic level, vending machines throughout the world share similar attributes. For example, they all include a controller that controls the operation of numerous peripheral devices (see GB-A-2 255 260). These peripherals are connected to the controller via a communications bus. In the United States, the standard vending machine communications bus is the MDB standard, i.e., the "International Multi-drop Interface Standard," established by the National Automatic Merchandising Association (NAMA) of Chicago, Illinois. As expected, this is not the vending machine communication standard in Japan. There, the standard appears to be the VCCS standard.

A universal characteristic of the market for machine-vended goods is that these markets are extremely sensitive to the hardware costs of the vending machine. A small difference in cost of the hardware for a given machine can greatly effect its profitability.

To use a Japanese bill and coin validation mechanism, for example, a U.S. machine requires the Japanese mechanism to be modified so that it can communicate using the MDB protocol rather than the VCCS protocol. Alternatively, a specialized adapter could be constructed to convert from the VCCS protocol to the MDB protocol so that the Japanese mechanism could be used without modification. Both of these techniques significantly raise the cost of using the Japanese mechanism or peripheral.

Another option for using a Japanese peripheral device in a U.S. machine would be to provide the U.S. machine with a controller having two serial ports. One of the ports would be dedicated to the MDB bus, while the other would be dedicated to the VCCS bus. Unfortunately, this requires a custom integrated circuit (IC) that has two serial ports. Such a customized IC is very expensive.

It is a problem to integrate vending machine peripheral devices of disparate communication standards, e.g., MDB and VCCS, into a single vending machine and yet still have acceptably low hardware costs given the extreme price sensitivity of the market for machine-vended goods.

### DISCLOSURE OF INVENTION

It is an object of the invention to solve the problems of the conventional art discussed above.

It is an object of the invention to provide a vending machine architecture for operatively connecting vending machine peripherals of different communication standards to a main controller in a cost effective manner given the extreme cost sensitivity in the market for machine-vended goods.

The objects of the invention are fulfilled by providing a vending machine operating system architecture for operatively connecting vending machine peripherals of different communication standards to a main controller, the architecture comprising: a main controller, a first bus for connecting to at least one vending machine peripheral according to a first communication standard; a second bus for connecting to at least one vending machine peripheral according to a second communication standard; and connection means for connecting at least one of said first bus and second bus to said main controller.

The connection means of the present invention can be embodied by two universally synchronous receiver/transmitter (UART) devices for the first and second buses, respectively. Alternatively and preferably, the connection means can be embodied by a multiplexer for selectively connecting the main controller to either the first bus or the second bus.

The foregoing and other objectives of the present invention will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF DRAWINGS

Fig. 1 is a block diagram of the first embodiment of the invention;
Fig. 2 is a block diagram of a second embodiment of the invention; and
Fig. 3 depicts the look-up table of the second embodiment in more detail.

### MODES FOR CARRYING OUT THE INVENTION

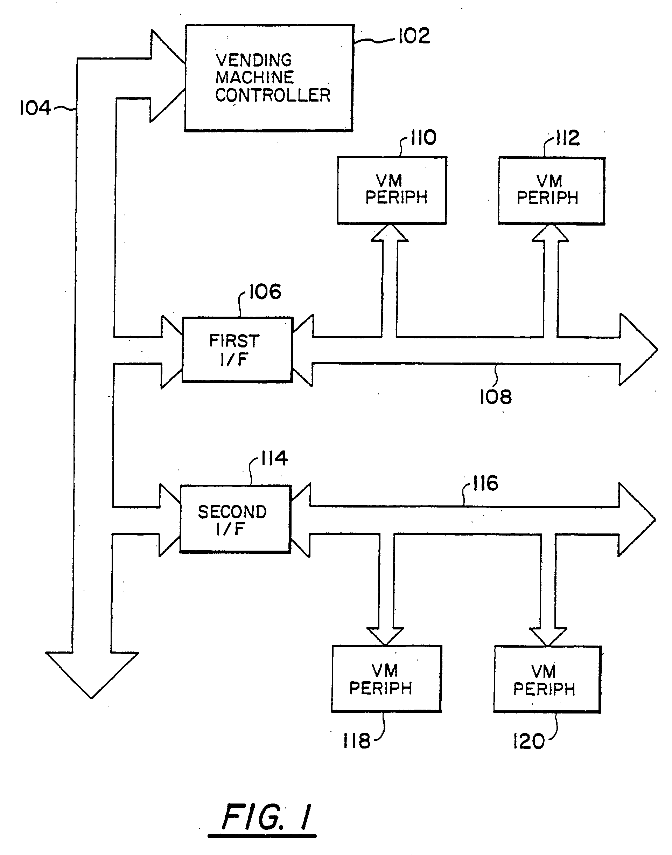

Fig. 1 is block diagram of the first embodiment of the present invention.

In Fig. 1, a vending machine controller 102 is connected to a main, preferably parallel, bus 104. A first interface 106 is connected between the main bus 104 and a first bus 108. The first bus 108 supports communication according to a first communication standard. Peripheral vending machine devices 110 and 112 are connected to the first bus 108 and communicate via the first communication standard. Examples of the peripherals 110 and 112 include coin mechanisms, credit card readers and bill validators. The peripherals 110 and 112, and the first bus 108, preferably conform to a serial standard, and more preferably conform to the MDB communication standard.

Also in Fig. 1, a second interface 114 connects the main bus 104 to a second bus 116. The second bus 116 supports communications according to a second communication protocol different than the protocol for the first bus 108. Vending machine peripheral devices 118 and 120 are connected to the second bus 116. Examples of the peripherals 118 and 120 include coin mechanisms, credit card readers and bill validators.

The communications standard supported by the second bus 118 and to which the peripherals 118 and 120 conform is preferably a serial standard, and is more preferably the VCCS standard of Japan. Alternatively, the protocol supported by the second bus 116 and the peripherals 118 and 120 could be any other well known serial standard such as RS232, RS 484 or the IRDA (for infrared data transfer).

It is noted that only two (2) peripheral devices have been depicted for each of the buses 108 and 116 to reduce the complexity of the drawing. These are merely representative of the many peripherals that can be attached to such buses.

The interfaces 106 and 114 of Fig. 1 are preferably a universal asynchronous receiver/transmitter (UART) device. Alternatively, the interfaces 106 and 114 could be formed from an array of discreet logic components.

The general VCCS electrical specification is: serial, eight data bits, seven wires (two data, sync, signal common, power ground 24v, 8v); 4800 bits per second, 0-24 volts signal. The electrical specification for the MDB protocol is: serial current loop; five wires (two data, signal common, power ground, 34v) nine bits (eight data bits plus 'status right single' bit), 9600 bits per second, 0-5 volts signal (TTL level).

Both the MDB and VCCS standards use device addresses from 0 to 31. The VCCS protocol augments the eight data bits with a separate directional (controller to peripheral) synchronization signal line. In contrast, the MDB protocol uses eight data bits plus a bi-directional 'status right single' bit.

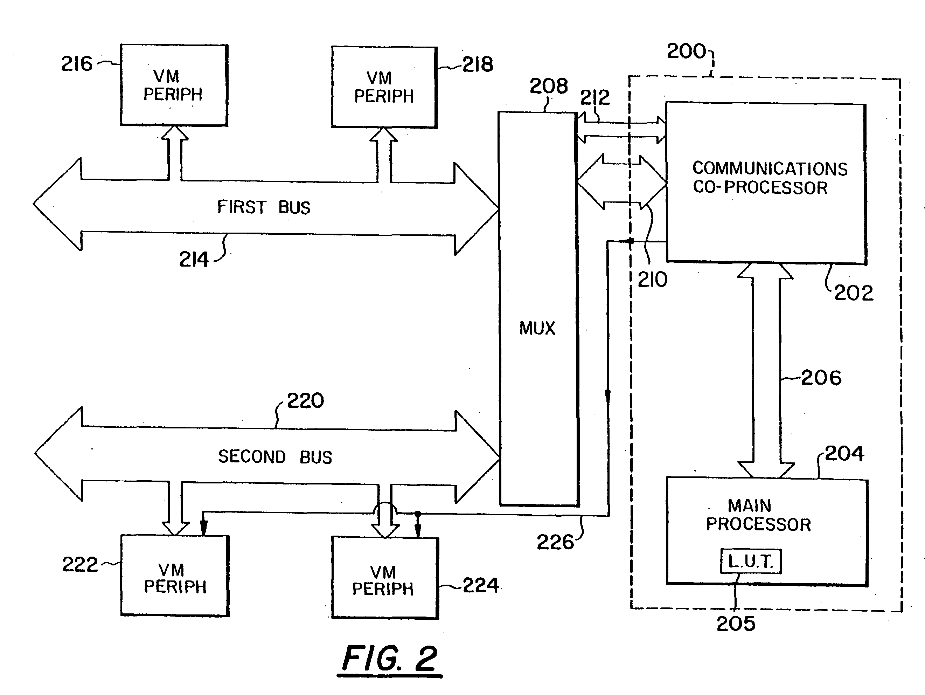

Fig. 2 depicts a block diagram of a second embodiment of the invention.

In Fig. 2, a main controller 200 includes a main processor 204 and a main communications co-processor 202 connected to the main processor 204 via a preferably parallel bus 206. The communications co-processor 202 has at least the functional capabilities of a UART device. The main processor 204 includes a look-up table 205. The main controller 200, i.e., the communications co-processor 202 is connected to a multiplexer 208 via a bus 210. In addition, the communications co-processor 202 sends one or more control signals to the multiplexer 208 via the bus 212.

The multiplexer 208 of Fig. 2 is connected to a first bus 214 and a second bus 220. The first bus 214 supports a communication protocol different than the second bus 220. Vending machine peripheral devices 216 and 218 are connected to the first bus 214 and conform to the communication protocol of the first bus 214. Similarly, vending machine peripheral devices 222 and 224 connect to the second bus 220 and conform to the communication protocol thereof. As with the first embodiment, only two peripheral devices have been depicted as being connected to the buses to simplify the drawings; these are two of but many peripherals that can be connected to the first and second buses, respectively. An additional signal line 226 is shown as conveying a signal from the communications co-processor 202 to each of the peripherals 222 and 224.

The protocol of the first bus is preferably serial and more preferably is the MDB standard. The protocol of the second bus is preferably serial, and is more preferably the VCCS standard of Japan. Alternatively, the protocol of the second bus could be any other well known serial standard such as RS 232, RS 484 or IRDS (for infrared data transfer).

Because the first bus 214 and the second bus 220 are both serial, the bus 210 is necessarily serial. To account for the differences between the MDB standard and the VCCS standard, the additional signal line 226 is provided over which the communications co-processor sends a synchronization signal.

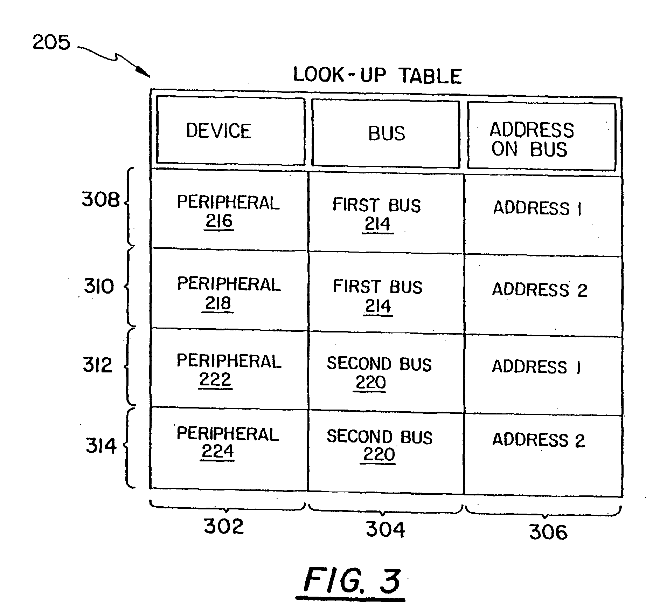

Fig. 3 depicts the look-up table 205 of Fig. 2 in more detail. Column 302 of table 205 lists the identity of a device that is connected to either the first bus 214 or the second bus 220. The second column 204 identifies the bus to which the device identified in the same row at column 302 is connected. The third column 306 lists the address of the device identified in the same row at column 302. Thus, the rows 308, 310, 312 and 314 present the pertinent information for the peripheral devices 216, 218, 222 and 224, respectively.

The operation of the embodiments of the invention will be described below.

Both of the preferred bus communication protocols, namely the MDB standard and the VCCS standard, use a half-duplex polling scheme rather than an interrupt-driven scheme. The main controller 102 of Fig. 1 or the primary processor 204 of Fig. 2 sequentially polls the various peripherals on the first and second buses 108 and 116, respectively. The peripherals remain silent on the bus until they are polled, at which time they perform an action an/or respond with status information.

Among the components of a vending machine, the UART devices in the interfaces 106 and 114 are comparable, and second only, in cost to the processor embodying the main controller 102. While more cost effective than, e.g., re-engineering a VCCS-based peripheral to operate directly according to the MDB protocol or providing a custom designed converter for converting from the VCCS protocol to MDB protocol, the embodiment of Fig. 1 is more expensive than the embodiment of Fig. 2. Hence the embodiment of Fig. 2 is preferred.

In Fig. 2, one interface in the form of the communications co-processor 202 (having at least the functional capabilities of a single UART), is needed rather than two UART devices. But to achieve this approximately 50% reduction in the number of UART devices required, the multiplexer 208 must be provided. When the main processor 204 desires to poll a peripheral on a given bus, it sends one ore more control signals to the multiplexer 208 via the communications co-processor 202 that causes the multiplexer to connect the bus 210 to the selected first for second bus 214 or 220.

The main processor 204 uses the information within the look-up table 205 to locate a desired peripheral device. For example, if the main processor 204 needs to access the peripheral 216, then it retrieves the identity of the bus to which the peripheral 216 is connected and the address that the peripheral 216 has on that bus by applying the identity of the peripheral 216 to the table 205.

An advantage of the invention is that it permits peripheral devices conforming to disparate communication protocols to be used within the same vending machine in a cost effective manner despite the extreme cost sensitivity of the market for machine-vended goods. Moreover, the second embodiment only requires the use of a single communications co-processor rather than two UART devices, which represents an approximately 50% cost savings for what is the second most expensive component in a vending machine.

## Claims

1. A vending machine operating system architecture for operatively connecting vending machine peripherals (110, 112, 118, 120, 216, 218, 222, 224) of different communication standards to a main controller (102, 200), the architecture comprising:
a main controller (102, 200);
a first bus (104, 214) for connecting to at least one vending machine peripheral (110, 112, 216, 218) according to a first communication standard;
a second bus (116, 220) for connecting to at least one vending machine peripheral (118, 120, 222, 224) according to a second communication standard; and
connection means (106, 108, 208, 210, 212) for connecting at least one of said first bus and second bus to said main controller (200).

2. The architecture of claim 1, wherein said connection means includes a multiplexer (208) for selectively connecting said main controller (200) to one of said first bus (214) and said second bus (220).

3. The architecture of claim 1, wherein said first communication standard and said second communication standard are serial.

4. The architecture of claim 3, wherein said first communication standard is the multi-drop bus (MDB) standard.

5. The architecture of claim 3, wherein at least one additional signal line (226) is connected between each of said at least one vending machine peripheral (222, 224) coupled to said second bus (220) and said main controller (200).

6. The architecture of claim 3, wherein said second communication standard is the VCCS standard.

7. The architecture of claim 1, wherein said main controller includes:
a communications co-processor (202) connected to said connection means; and
a primary processor (204) connected to said communications co-processor.

8. The architecture of claim 7, wherein said main processor includes a look-up table (205) for storing data relating an identity of each of said vending machine peripherals (216, 218, 222, 224) , the buses (214, 220) to which said peripherals (216, 218, 222, 224) connect, and the address assigned to said peripherals (216, 218, 222, 224), respectively.

9. The architecture of claim 1, wherein said main controller includes a main bus (104) connected to said main controller (102), and said connection means includes a first interface (106) for interfacing said first bus (108) to said main bus (104), and a second interface (114) for interfacing said second bus (116) to said main bus (104).

10. The architecture of claim 9, wherein said first interface (106) includes a first universal asynchronous receiver/transmitter (UART) device (106) and said second interface (114) includes a second UART device (114).

## Patentansprüche

1. Verkaufsautomatenbetriebssystemarchitektur zur Wirkverbindung von Verkaufsautomatenperipheriegeräten (110, 112, 118, 120, 216, 218, 222, 224) unterschiedlicher Datenübertragungsstandards mit einem Hauptkontroller (102, 200), wobei die Architektur umfasst:
einen Hauptkontroller (102, 200);
einen ersten Bus (104, 214) zum Verbinden mit mindestens einem Verkaufsautomatenperipheriegerät (110, 112, 216, 218) gemäß einem ersten Datenübertragungsstandard;
einen zweiten Bus (116, 220) zum Verbinden mit mindestens einem Verkaufsautomatenperipheriegerät (118, 120, 222, 224) gemäß einem zweiten Datenübertragungsstandard; und
Verbindungseinrichtungen (106, 108, 208, 210, 212) zum Verbinden von mindestens einem von dem ersten Bus und dem zweiten Bus mit dem Hauptkontroller (200).

2. Architektur nach Anspruch 1, bei der die Verbindungseinrichtung einen Multiplexer (208) zum wahlweisen Verbinden des Hauptkontrollers (200) mit einem von dem ersten Bus (214) und dem zweiten Bus (220) umfasst.

3. Architektur nach Anspruch 1, bei der der erste Datenübertragungsstandard und der zweite Datenübertragungsstandard seriell sind.

4. Architektur nach Anspruch 3, bei der der erste Datenübertragungsstandard der Mehrstationenbus (MDB)-Standard ist.

5. Architektur nach Anspruch 3, bei der mindestens eine zusätzliche Signalleitung (226) zwischen jedes von dem mindestens einen Verkaufsautomatenperipheriegerät (222, 224) geschaltet ist, das mit dem zweiten Bus (220) und dem Hauptkontroller (200) gekoppelt ist.

6. Architektur nach Anspruch 3, bei der der zweite Datenübertragungsstandard der VCCS-Standard ist.

7. Architektur nach Anspruch 1, bei der der Hauptkontroller umfasst:
einen Datenübertragungskoprozessor (202), der mit den Verbindungseinrichtungen verbunden ist; und
einen primären Prozessor (204), der mit dem Datenübertragungskoprozessor verbunden ist.

8. Architektur nach Anspruch 7, bei der der Hauptprozessor eine Nachschlagtabelle (205) umfasst, um Daten betreffend eine Identität von jedem der Verkaufsautomatenperipheriegeräte (216, 218, 222, 224), der Busse (214, 220), mit denen die Peripheriegeräte (216, 218, 222, 224) verbunden sind, bzw. der den Periphergeräten (216, 218, 222, 224) zugeordneten Adresse zu speichern.

9. Architektur nach Anspruch 1, bei der der Hauptkontroller einen Hauptbus (104) umfasst, der mit dem Hauptkontroller (102) verbunden ist, und die Verbindungseinrichtung eine erste Schnittstelle (106) zum Verknüpfen des ersten Busses (108) mit dem Hauptbus (104) und eine zweite Schnittstelle (114) zum Verknüpfen des zweiten Busses (116) mit dem Hauptbus (104) umfasst.

10. Architektur nach Anspruch 9, bei der die erste Schnittstelle (106) ein erstes asynchrones Universalempfangs-/sende (UART) gerät (106) umfasst und die zweite Schnittstelle (114) ein zweites UART-Gerät (114) umfasst.

## Revendications

1. Architecture de système d'exploitation de distributeur automatique destinée à connecter de façon fonctionnelle des périphériques de distributeur automatique (110, 112, 118, 120, 216, 218, 222, 224) de différents standards de communications à un contrôleur principal (102, 200), l'architecture comprenant :
un contrôleur principal (102, 200),
un premier bus (104, 214) en vue d'une connexion à au moins un périphérique de distributeur automatique (110, 112, 216, 218) conformément à un premier standard de communications,
un second bus (116, 220) en vue d'une connexion à au moins un périphérique de distributeur automatique (118, 120, 222, 224) conformément à un second standard de communications, et
un moyen de connexion (106, 108, 208, 210, 212) destiné à connecter au moins l'un desdits premier bus et second bus audit contrôleur principal (200).

2. Architecture selon la revendication 1, où ledit moyen de connexion comprend un multiplexeur (208) destiné à connecter de façon sélective ledit contrôleur principal (200) à l'un dudit premier bus (214) et dudit second bus (220).

3. Architecture selon la revendication 1, dans laquelle ledit premier standard de communications et ledit second standard de communications sont de type série.

4. Architecture selon la revendication 3, dans laquelle ledit premier standard de communications est le standard à bus multipoint (MDB).

5. Architecture selon la revendication 3, dans laquelle au moins une ligne supplémentaire de signal (226) est reliée entre chacun desdits au moins un périphérique de distributeur automatique (222, 224) relié audit second bus (220) et ledit contrôleur principal (200).

6. Architecture selon la revendication 3, dans laquelle ledit second standard de communications est le standard VCCS.

7. Architecture selon la revendication 1, dans laquelle ledit contrôleur principal comprend :
un coprocesseur de communications (202) relié audit moyen de connexion, et
un processeur principal (204) relié audit coprocesseur de communications.

8. Architecture selon la revendication 7, dans laquelle ledit processeur principal comprend une table de consultation (205) destinée à stocker des données se rapportant à une identité de chacun desdits périphériques de distributeur automatique (216, 218, 222, 224), des bus (214, 220) auxquels lesdits périphériques (216, 218, 222, 224) sont reliés, et de l'adresse affectée auxdits périphériques (216, 218, 222, 224), respectivement.

9. Architecture selon la revendication 1, dans laquelle ledit contrôleur principal comprend un bus principal (104) relié audit contrôleur principal (102), et ledit moyen de connexion comprend une première interface (106) destinée à réaliser une interface entre ledit premier bus (108) et ledit bus principal (104), et une seconde interface (114) destinée à réaliser une interface entre ledit second bus (116) et ledit bus principal (104).

10. Architecture selon la revendication 9, dans laquelle ladite première interface (106) comprend un premier dispositif d'émetteur/récepteur asynchrone universel (UART) (106) et ladite seconde interface (114) comprend un second dispositif UART (114).
